# EUROPEAN PATENT SPECIFICATION

(11) **EP 1 136 166 B1**
(45) Date of publication and mention of the grant of the patent: **26.02.2003**
(21) Application number: 00810217.0
(22) Date of filing: 15.03.2000
(51) Int. Cl.: B23H 11/00, G05B 19/12, B23Q 3/155, B23H 7/20

(54) **System for moving workpieces to be processed by electroerosion machines**
Transporteinrichtung für Werkstücke die mittels Funkenerosionsmaschinen bearbeitet werden müssen
Système de transport de pièces devant être traitées par des machines d'usinage par électroérosion

(43) Date of publication of application: 26.09.2001
(73) Proprietor: PCam Sagl, 6645 Brione S/Minusio (CH)
(72) Inventor: Regazzoni, 6947 Vaglio (CH)
(74) Representative: Fiammenghi-Domenighetti, Delfina

(56) References cited:
- EP-A- 0 283 034
- US-A- 4 587 716
- US-A- 4 596 066
- US-A- 5 374 231
- PATENT ABSTRACTS OF JAPAN vol. 018, no. 426 (P-1784), 9 August 1994 (1994-08-09) -& JP 06 131031 A (MAKINO MILLING MACH CO LTD), 13 May 1994 (1994-05-13)

## Description

This invention regards the field of automatic systems for feeding electroerosion machines.

More in particular, it regards the sector that deals specifically with arranging the workpieces within a set period of time (such as a day or a different period) in a storage place that mostly consists of one or more shelves, subsequently extracting them and placing them on an electroerosion machine in a manner and in a position that enables them to be processed.

The work carried out by the system is finished when processing has finished and the workpieces are definitively picked up and placed on a bench or on a support surface that can be considered to be a unit for storing processed items until they are picked up for delivery.

Systems of this kind, controlled by computer, are already in use but normally have disadvantages and limitations: firstly their conformation means that they can feed only one electroerosion machine and can handle only workpieces weighing no more than a few dozen kilos.

In the second place, existing systems are based on shelves with fixed pre-set positions for a given type of workpiece. The shelves are therefore difficult to adapt to new production requirements. Finally, traditional systems have axis control systems that are entirely electronic, expensive and also difficult to reprogram.

To avoid all these disadvantages, the inventor of this invention has devised a system that is not only structurally suited to feeding several electroerosion machines arranged within a given area and to handle heavy workpieces weighing up to several hundred kilos but which is also sufficiently accurate and rapid to then position them in the most suitable position in the most suitable manner for the operation that must then be carried out.

This last result significantly influences the efficiency and operating precision of the invention's system and is obtained by providing the manipulator arm with the tools to communicate with the controlling computer, which memorises all the data on the position occupied by the manipulator arm when it takes hold of or releases a workpiece in the storage area or on an electroerosion machine.

The use of identification chips enables the workpiece loaded by the system to be identified and enables the series of processing programs that must be performed on one or several electroerosion machines that are current in the production area to be assigned.

This invention in fact consists of a system for moving workpieces as defined in the preamble to attached claim 1, characterised by the features that are described in the characterising portion of claim 1.

There follows a more detailed description of a favourite version of a system that has been devised in accordance with the invention, which does not, however place limits or constraints on other versions that may be obtained by an industry technician using as a departure the teachings contained in claim 1.

This description will also refer to the enclosed drawings, which show:
- in fig. 1 a drawing of the layout of the above version of the system specified by the invention linked to several electroerosion machines;
- in fig. 2 a blown-up side view of the manipulator arm of the system in fig. 1.

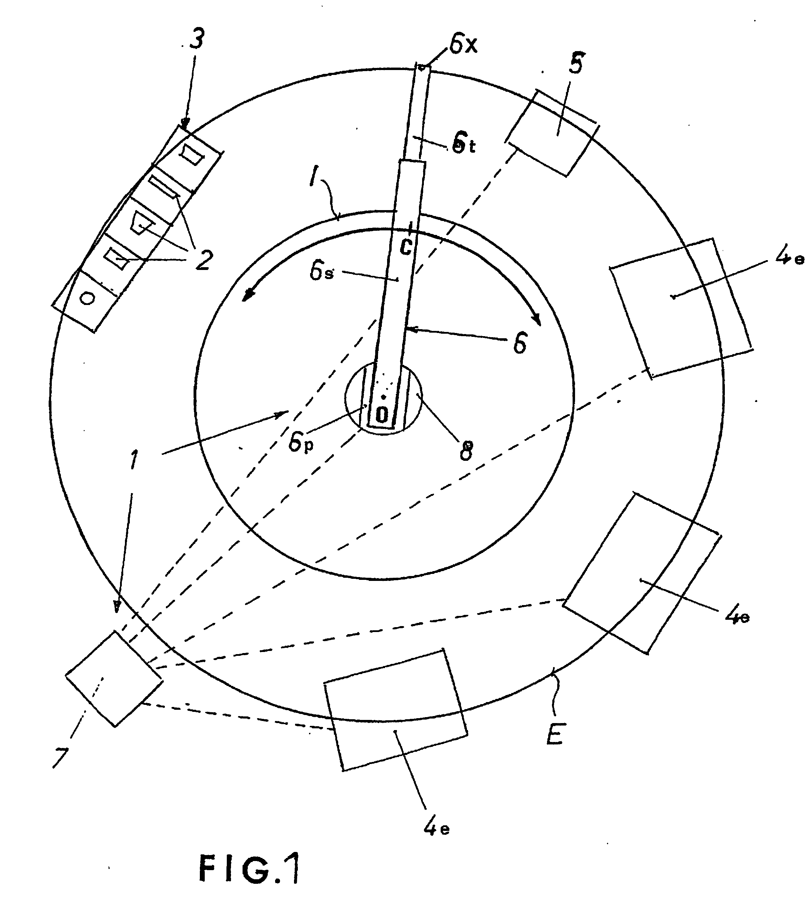

In fig. 1 it can be seen that a system 1 devised in accordance with the invention comprises a manipulator arm 6 that is fixed by a base 8 to the ground T.

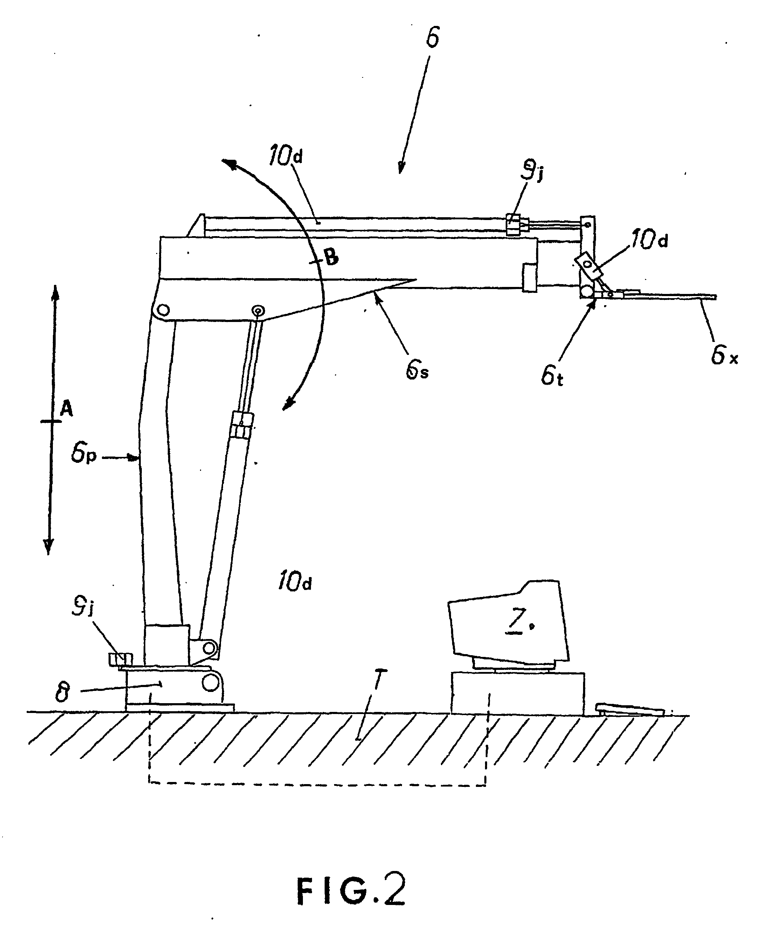

The manipulator arm 6, known hereinafter as the 'manipulator' for the sake of brevity, is more clearly visible in fig. 2 and is divided into the three sections 6p, 6s, 6t.

The first section 6p can extend axially by a pre-set amount (arrow A, fig. 2) and can turn by 360 degrees in relation to base 8 (arrow B, fig. 1).

The second section 6s can turn on a vertical plane (arrow C, fig. 2) around the joining point of the aforementioned first section 6p, and ends in a third section 6t, that is jointed at its free extremity, which is constructed in such a way as to enable its tilt to be varied in relation to the longitudinal axis of the second section 6s.

The system of movements described above enables extremity 6x of the third section 6t, which is also the most extreme point of manipulator 6, to travel along any line and stop at any point contained in a hollow cylinder at a prefixed height whose section is a circular crown with the centre O on the base 8 and which has a required external diameter E and a pre-set internal diameter I.

In order to make the system I completely functional it is therefore necessary to arrange the different electroerosion machines 4c, (or at least the electroerosion machine areas in which the workpieces 2n are placed during processing), the shelving 3 that is used as a storage place and any washing and/or measuring station 5 within the circular crown station described previously.
The measuring station can be used for both picking up the position of the workpieces and for testing the accuracy of the processing tasks carried out.

The different parts of the manipulator 6 are driven by hydraulic devices 10d that are connected to them and activated electrically using the familiar methods.

The manipulator 6 has several position sensors 9j in order to carry out in the previously described required movements in a simplified manner according to the sequences of instructions given by the computer 7 that controls and directs movement, the position sensors are based on one or more linear or rotational position transducers of the familiar type that measure and control the movements of the different sections 6p, 6s and 6t and accordingly the position of the most extreme point 6x at which, using the familiar systems, each of the workpieces 2n is fitted and removed.

In this way a system of extreme precision and versatility has been obtained that can feed several electroerosion machines 4c and rapidly move even workpieces of considerable size.

Diameters E, I and the height of the hollow cylinder called the 'service' cylinder obviously depend on the dimensions of the manipulator 6.

Naturally, the computer 7, when moving the manipulator 6, must also be able to respond to the signals transmitted by each of the machines 4c, e.g. by interrupting or modifying one or more manipulator 6 movements when situations arise that require this to be done. For example, computer 7 must be able to recognise and correctly interpret a signal sent by an electroerosion machine 4c that for unforeseen reasons has not finished a task within the pre-set time and to stop the manipulator 6 that should have picked up a finished workpiece.

The computer software and the interface components of the electroerosion machines that are to be fed use the familiar technology.

## Claims

1. System (1) for moving workpieces (2n) from or towards a storage place (3), from there to one or more electroerosion machines (4c) and from these to a washing unit and/or measuring station (5) **characterised by** the fact of comprising an articulated manipulator arm (6) that moves in accordance with the instructions sent by a computer (7) and fitted with tools that communicate with the aforementioned computer (7), which stores the data on the identification of the workpieces (2n) and the position taken up by the manipulator arm when depositing each of the workpieces (2n) both in the storage place (3) and on any of the electroerosion machines (4c) so that the workpieces (2n) can be processed, the aforementioned computer (7) being provided with means for ordering a sequence of movements of the manipulator arm (6) in accordance with a required program and based on the aforementioned stored data previously transmitted by the manipulator arm (6).

2. System in accordance with claim 1, in which the aforementioned computer (7) is able to recognise and interpret the signals sent by each of the aforementioned electroerosion machines (4c) and to accordingly modify the sequence of movements that the aforementioned manipulator arm (6) is ordered to carry out.

3. System in accordance with previous claims in which the manipulator arm (6) is fixed to a base (8) on the ground (T) and is articulated and moved by devices (10d) connected to it in such a way that the end (6x) on which each of the aforementioned workpieces (2n) is fitted whilst it is being moved can travel along any line in a hollow cylinder of a prefixed height with a crown circular section with the centre (0) located on the base (8) with a prefixed external diameter (E) and a prefixed internal diameter (I).

4. System in accordance with claim 3 in which the manipulator arm (6) is divided into at least three sections (6p, 6s, 6t), the first one of which (6p) is fixed to the aforementioned base (8) and can rotate 360 degrees and extend axially, and the second section (6s) can vary its tilt in relation to the aforementioned first section (6p) or extend axially, and terminates with a third section (6t) that is articulated on it and is able to vary its tilt in relation to the longitudinal axis of the second section (6s).

5. System in accordance with claims 3 or 4 in which the devices that move the manipulator arm (6) are hydraulic, are activated electrically and are assisted by a range of position sensors, (9j) that are based on one or more transducers, which control the movements of the different sections (6p, 6s, 6c) of the manipulator arm (6) that are generated by them.

## Patentansprüche

1. Einrichtung (1) zum Bewegen von Werkstücke (2n) von und zu einem Speicherplatz (3), von dort zu einer oder mehreren Funkenerosionsmaschinen (4c) und von diesen zu einer Wascheinheit und/oder Meßstation, (5) **gekennzeichnet durch** einen gelenkigen Manipulatorarm (6), der sich gemäß den von einem Computer (7) ausgesandten Befehlen bewegt und mit Werkzeugen ausgestattet ist, die mit dem zuvor genannten Computer (7) in Verbindung stehen, der die Daten bezüglich der Identifikation der Werkstücke (2n) und der von dem Manipulatorarm (6) eingenommenen Position speichert, wenn jedes der Werkstücke (2n) sowohl in dem Speicherplatz (3) als auch auf irgendeiner der Funkenerosionsmaschinen (4c) abgelegt wird, so daß die Werkstücke (2n) bearbeitet werden können, wobei der zuvor genannte Computer (7) mit Mitteln zum Anweisen einer Folge von Bewegungen des Manipulatorarms (6) in Übereinstimmung mit einem erforderlichen Programm versehen ist und auf die zuvor von dem Manipulatorarm (6) übertragenen zuvor genannten gespeicherten Daten zurückgreift.

2. Einrichtung nach Anspruch 1, bei der der zuvor erwähnte Computer (7) in der Lage ist, die von jeder der zuvor erwähnten Funkenerosionsmaschinen (4c) ausgesendeten Signale zu erkennen und auszuwerten und demnach die Folge von Bewegungen zu modifizieren, die der zuvor erwähnte Manipulatorarm (6) ausführen soll.

3. Einrichtung nach den vorhergehenden Ansprüchen, bei der der Manipulatorarm (6) auf einem Basisteil (8) auf dem Boden (T) befestigt ist und angelenkt und von Einrichtungen (10d) bewegt wird, die mit ihm derart verbunden sind, daß das Ende (6x), auf dem jedes der zuvor erwähnten Werkstücke (2n) bei seiner Bewegung aufgesetzt ist, sich entlang jeder beliebigen Linie in einem Hohlzylinder von vorgegebener Höhe mit einem kreisförmigen Kronenabschnitt bewegen kann, dessen Zentrum (O) sich auf dem Basisteil (8) mit einem vorgegebenen Außendurchmesser (E) und einem vorgegebenen Innendurchmesser (I) befindet.

4. Einrichtung nach Anspruch 3, bei der der Manipulatorarm (6) in mindestens drei Abschnitte (6p, 6s, 6t) unterteilt ist, von denen der erste (6p) an dem zuvor erwähnten Basisteil (8) befestigt ist, sich um 360° drehen kann und sich axial erstreckt und der zweite Abschnitt (6s) seine Neigung bezüglich des zuvor genannten ersten Abschnitts (6p) ändern kann oder sich axial erstreckt und an einem dritten Abschnitt (6t) endet, der an ihm angelenkt ist und seine Neigung bezüglich der longitudinalen Achse des zweiten Abschnittes (6s) ändern kann.

5. Einrichtung nach Anspruch 3 oder 4, bei der die Einrichtungen, die den Manipulatorarm (6) bewegen, hydraulischer Natur sind, elektrisch aktiviert und von mehreren Positionssensoren (9j) unterstützt werden, die auf einem oder mehreren Umwandlern beruhen, die die Bewegungen der verschiedenen Abschnitte (6p, 6s, 6c) des Manipulatorarms (6) steuern, die durch sie erzeugt werden.

## Revendications

1. Système (1) pour déplacer des pièces (2n) depuis un emplacement d'emmagasinage (3) ou vers cet emplacement, de là vers une ou plusieurs machines d'usinage par électroérosion (4c), et depuis celles-ci vers un ensemble de lavage et/ou une station de mesurage (S), **caractérisé par le fait qu'**il comprend un bras de manipulation articulé (6) qui se déplace conformément aux instructions envoyées par un ordinateur (7) et équipé d'outils qui communiquent avec l'ordinateur (7) susmentionné, qui emmagasine les données concernant l'identification des pièces (2n) et la position prise par le bras de manipulation lors du dépôt de chacune des pièces (2n) à la fois dans l'emplacement d'emmagasinage (3) et sur n'importe laquelle des machines d'usinage par électroérosion (4c) de sorte que les pièces (2n) puissent être traitées, l'ordinateur susmentionné (7) comportant des moyens pour commander une séquence de déplacements du bras de manipulation (6) conformément à un programme requis et basé sur les données emmagasinées susmentionnées, antérieurement transmises par le bras de manipulation (6).

2. Système selon la revendication 1, dans lequel l'ordinateur susmentionné (7) est capable de reconnaître et d'interpréter les signaux envoyés par chacune des machines susmentionnées d'usinage par électroérosion (4c) et de modifier conformément la séquence de déplacements que le bras de manipulation susmentionné (6) reçoit l'ordre d'effectuer.

3. Système selon les revendications précédentes, dans lequel le bras de manipulation (6) est fixé à une base (8) sur le sol (T) et est articulé et déplacé par des dispositifs (10d) qui lui sont reliés de telle façon que l'extrémité (6x) sur laquelle est fixée chacune des pièces susmentionnées (2n) alors qu'il se déplace peut se mouvoir selon toute ligne dans un cylindre creux d'une hauteur préfixée avec une section circulaire en couronne avec le centre (O) placé sur la base (8) avec un diamètre extérieur préfixé (E) et un diamètre intérieur préfixé (I).

4. Système selon la revendication 3, dans lequel le bras de manipulation (6) est divisé en au moins trois sections (6p, 6s, 6t), dont la première (6p) est fixée à la base susmentionnée (8) et peut tourner sur 360 degrés et s'étendre axialement, et la seconde section (6s) peut faire varier son oscillation par rapport à la première section susmentionnée (6p) ou s'étend axialement, et se termine par une troisième section (6t) qui lui est articulée et dont l'oscillation peut varier par rapport à l'axe longitudinal de la seconde section (6s).

5. Système selon les revendications 3 ou 4, dans lequel les dispositifs qui déplacent le bras de manipulation (6) sont hydrauliques, sont activés électriquement et sont assistés par une rangée de capteurs de position (9j), qui sont basés sur un ou plusieurs transducteurs, qui contrôlent les déplacements, produits par eux, des différentes sections (6p, 6s, 6c) du bras de manipulation (6).
